(19) Europäisches Patentamt
European Patent Office
Office européen des brevets

(11) **EP 1 727 849 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(21) Anmeldenummer: **05700331.1**

(22) Anmeldetag: **24.01.2005**

(51) Int Cl.:
***C08G 63/80*** *(2006.01)*　　***C08G 63/183*** *(2006.01)*
***C08G 63/78*** *(2006.01)*

(86) Internationale Anmeldenummer:
**PCT/CH2005/000036**

(87) Internationale Veröffentlichungsnummer:
**WO 2005/090437 (29.09.2005 Gazette 2005/39)**

(54) **TEILKRISTALLINES POLYETHYLENTEREPHTHALAT**

PARTIALLY CRYSTALLINE POLYETHYLENE TEREPHTHALATE

POLYETHYLENE TEREPHTALATE PARTIELLEMENT CRISTALLIN

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.03.2004 DE 102004014590**

(43) Veröffentlichungstag der Anmeldung:
**06.12.2006 Patentblatt 2006/49**

(73) Patentinhaber: **Polymetrix AG**
**9245 Oberbüren (CH)**

(72) Erfinder:
• **CHRISTEL, Andreas**
**CH-9524 Zuzwil (CH)**
• **CULBERT, Brent Allan**
**CH-9500 Wil (CH)**
• **JÜRGENS, Theodor**
**44581 Casstrop-Rauxel (DE)**

(74) Vertreter: **Hepp Wenger Ryffel AG**
**Friedtalweg 5**
**9500 Wil (CH)**

(56) Entgegenhaltungen:
**EP-A- 0 465 040　EP-A- 0 532 988**
**WO-A-01/42334　WO-A-99/61505**

• **KARAYANNIDIS G P ET AL: "SOLID-STATE POLYCONDENSATION OF POLY(ETHYLENE TEREPHTHALATE) RECYCLED FROM POSTCONSUMER SOFT-DRINK BOTTLES. I" 20. Dezember 1993 (1993-12-20), JOURNAL OF APPLIED POLYMER SCIENCE, JOHN WILEY AND SONS INC. NEW YORK, US, PAGE(S) 2135-2142 , XP000462219 ISSN: 0021-8995 Abbildung 3 Seite 2141, Spalten 1,2**

Bemerkungen:
Die Akte enthält technische Angaben, die nach dem Eingang der Anmeldung eingereicht wurden und die nicht in dieser Patentschrift enthalten sind.

EP 1 727 849 B1

**Beschreibung**

Die Erfindung bezieht sich auf ein teilkristallines Polyethylenterephthalat mit einem Polymerisationsgrad grösser als 80, insbesondere grösser als 100, das aus einer Diol-Komponente und einer Dicarbonsäure-Komponente hergestellt wird.

Die Erfindung bezieht sich ausserdem auf ein Verfahren zur Herstellung eines Polyethylenterephthalats, insbesondere des genannten Polyethylenterephthalats, mit den folgenden Schritten: Herstellen einer Polykondensat-Prepolymerschmelze; Formen von Granulaten und Verfestigen der Polykondensat-Prepolymerschmelze; Anheben des Kristallisationsgrades der Prepolymergranulate; und Anheben des Molekulargewichtes der Granulate mittels Festphasen-Polykondensation

**Stand der Technik**

Polyethylenterephthalate werden z.B. für die Herstellung von Folien, Flaschen, Schalen, Bechern, Bändern, Platten, Garnen oder Fäden in massiver oder geschäumter Form verwendet.

Verfahren zur Herstellung von kommerziell verwendbaren Polyethylenterephthalaten, die für die nachfolgende Verarbeitung aufgeschmolzen werden müssen, sind im Stand der Technik ausreichend bekannt und z.B. durch US 4161578, Herron beschrieben. Die so erhaltenen Polyethylenterephthalate haben aber einen relativ hohen Schmelzpunkt und ungünstige Aufschmelzeigenschaften.

Es ist ebenfalls bekannt, Polyethylenterephthalat mit verbesserten Aufschmelzeigenschaften durch Zugabe von erhöhten Mengen an Comonomeren herzustellen. Dieser Zusammenhang wird z.B. in EP 0532 988 beschrieben. Dabei ergibt sich jedoch der Nachteil, dass auch die mechanischen Eigenschaften und die Kristallisationseigenschaffen beeinflusst werden, was sich für viele Anwendungen negativ auswirkt. Zusätzlich ist der Preis vieler Comonomere deutlich höher als der Preis der Basis-Monomere.

In der WO 01/42334 ist beschrieben, dass zur Verbesserung der Schmelzeigenschaften eines Polyethylenterephthalats dessen Comonomergehalt durch entsprechende Wahl der Ausgangskomponenten auf mindestens 7% erhöht werden muss. Zum Vergleich werden Polyethylenterephthalate untersucht, welche einen niedrigeren Comonomergehalt aufweisen, aber ausgehend von einem Prepolymer mit einem hohen Polymerisationsgrad (intrinsische Viskosität von 0,6) hergestellt wurden. Derartige Polyethylenterephthalate weisen einen ungünstigen "haze point" auf.

Karayannidis (J. Appl. Sci. 50, 2135 (1993)) betrifft Untersuchungen an recycelten Polyethylenterephthalat. Es ist nicht beschrieben, dass durch eine bestimmte Verfahrensführung bei der Herstellung des Polyethylenterephthalats ein Produkt mit vorteilhaften Schmelzeigenschaften erhalten werden kann.

In der WO 99/61505 ist die Herstellung eines Polyesterharzes mit einem geringen Acetaldehydgehalt beschrieben. Es sind Beispiele mit einem Comonomergehalt von weniger als 7% beschrieben, welche aber ausgehend von einem Prepolymer mit einem deutlich höheren Polymerisationsgrad (intrinsische Viskosität von 0,6) hergestellt werden und schlechte Schmelzeigenschaften aufweisen.

In der EP 0 532 988 wird ein Polymer ausgehend von einem Gemisch zweier unterschiedlicher Prepolymere mit einem Polymerisationsgrad oberhalb 50 hergestellt.

In der EP-0 465 040 A1 wird ein Prepolymer mit sehr hohem Molekulargewicht (IV-Wert grösser 0.6 dl/g) eingesetzt. Es ist nicht beschrieben, dass durch eine bestimmte Verfahrensführung bei der Herstellung des Polyethylenterephthalats ein Produkt mit vorteilhaften Schmelzeigenschaften erhalten werden kann.

**Die Erfindung**

Es ist eine Aufgabe der vorliegenden Erfindung, ein teilkristallines Polyethylenterephthalat zur Verfügung zu stellen, das sich durch verbesserte Aufschmelz- und Verarbeitungseigenschaften ohne die oben erwähnten Nachteile auszeichnet.

Es ist eine weitere Aufgabe der vorliegenden Erfindung, ein Granulat aus Polyethylenterephthalat zur Verfügung zu stellen, das sich durch verbesserte Aufschmelz- und Verarbeitungseigenschaften ohne die oben erwähnten Nachteile auszeichnet.

Diese Aufgabe wird gemäss Anspruch 1 dadurch gelöst, dass ein teilkristallines Polyethylenterephthalat mit einem Polymerisationsgrad grösser als 80, insbesondere grösser als 100, hergestellt aus einer Diol-Komponente, die zu 95 mol-% bis 100 mol-% aus Ethylenglykol besteht, und einer Dicarbonsäure-Komponente, die zu 95 mol-% bis 100 mol-% aus Terephthalsäure besteht, wobei der Gesamtgehalt an Comonomer zwischen 1 und 7% liegt, zur Verfügung gestellt wird, wobei in einem ersten Schritt die Diol-Komponente und die Dicarbonsäure-Komponente in flüssiger Phase zusammengegeben werden, um ein niederviskoses Prepolymer mit einem Polymerisationsgrad zwischen 10 und 50 zu erhalten, und das Prepolymer anschliessend zu Granulaten mit einer mittleren Granulatgrösse zwischen 0.2 und 3 mm granuliert und die Granulate einer Festphasen-Polykondensation bei einer Temperatur von weniger als 220°C für 6-30 h unterzogen werden, um ein Polyethylenterephthalat zu erhalten, wobei dessen DSC-Schmelzpunkt, gemessen mit einer Aufheizrate von 10°C/Min im ersten Durchgang und im zweiten Durchgang, unterhalb einer vom Comonomergehalt abhängigen Schmelztemperatur (Tm) eines vergleichbaren Standard-Polyethylenterephthalates liegt, welches über Festphasen-Polykondensation aus einem Prepolymer mit einem Polymerisationsgrad zwischen 65 und 80, das zu Granulaten mit einer Masse von 10 bis 30 mg geformt und mit Wasser unter seine Glasübergangstemperatur gekühlt worden war, hergestellt wurde, wobei Tm = T0 - 2.5°C * % Comonomergehalt (in mol%) entspricht und T0 kleiner/gleich 260°C beträgt, wobei der Comonomeranteil der Diolkomponente zur Hauptsache aus Diethylenglycol besteht, oder wobei Tm = T0 - 3°C * % Comonomergehalt (in mol%) entspricht und T0 kleiner/gleich 260°C beträgt.

Das erfindungsgemässe Polyethylenterephthalat wird mittels einer Stufe der Flüssigphasenpolymerisation und einer Stufe der Festphasenpolymerisation hergestellt, wobei zwischen den beiden Stufen ein Schritt zur Partikelherstellung erfolgt.

Das erfindungsgemässe Polyethylenterephthalat wird dadurch erzielt, dass im Schritt der Flüssigphasenpolymerisation die Zugabe von Additiven, die die Aktivierungsenergie der Veresterungsreaktion senken, auf ein Minimum beschränkt werden und dass im Schritt der Festphasenpolymerisation die Parameter Anfangsviskosität, Partikelgrösse, Behandlungstemperatur, Behandlungsgaszusammensetzung und Behandlungszeit so gewählt werden, dass ein übermässiger Anstieg der Schmelzenthalpie verhindert wird.

Erfindungsgemäss gilt für die Schmelztemperatur die Beziehung Tm = TO - 2.5°C * % Co-monomergehalt (in mol%), und TO ist kleiner/gleich 260°C, wobei der Comonomeranteil der Diolkomponente zur Hauptsache aus Diethylenglycol besteht. Besonders vorteilhaft ist es, wenn für die Schmelztemperatur gilt Tm = TO - 3°C * % Comonomergehalt (in mol%) und TO kleiner/gleich 260°C ist.

Der Comonomeranteil der Diolkomponente kann zur Hauptsache aus Diethylenglycol bestehen.

Vorzugsweise ist der Wert von TO kleiner/gleich 259°C und insbesondere kleiner/gleich 257°C.

Das erfindungsgemässe Polyethylenterephthalat wird vaus einer Diol-Komponente, die zu 95 mol-% bis 100 mol-% aus Ethylenglykol besteht, und einer Di-carbonsäureKomponente, die zu 95 mol-% bis 100 mol-% aus Terephthalsäure besteht, hergestellt, wobei der Gesamtgehalt an Comonomer zwischen 1 und 7% liegt.

Vorzugsweise wird das Polyethylenterephthalat aus einer Diol-Komponente, die zu 97 mol-% bis 99 mol-% aus Ethylenglykol besteht, und einer Dicarbonsäure-Komponente, die zu 97 mol-% bis 100 mol-% aus Terephthalsäure besteht, hergestellt, wobei der Gesamtgehalt an Comonomer zwischen 1.5 und 5% liegt.

Vorzugsweise liegt bei dem erfindungsgemässen Polyethylenterephthalat der DSC-Schmelzpunkt im ersten Durchgang und im zweiten Durchgang unter 245°C.

Weiterhin vorzugsweise ist bei dem erfindungsgemässen Polyethylenterephthalat der DSC-Schmelzpunkt im ersten Durchgang grösser als der DSC-Schmelzpunkt im zweiten Durchgang, wobei insbesondere T0 im ersten Durchgang kleiner/gleich 260°C beträgt und im zweiten Durchgang kleiner/gleich 258°C beträgt und vorzugsweise T0 im ersten Durchgang kleiner/gleich 259°C beträgt und T0 kleiner/gleich 257°C beträgt sowie im zweiten Durchgang kleiner/gleich 257°C beträgt und insbesondere T0 kleiner/gleich 255° C beträgt.

Bei dem Polyethylenterephthalat handelt es sich vorzugsweise um ein thermisch teilkristallisiertes Polyethylenterephthalat oder um ein im wesentlichen lineares Polyethylenterephthalat.

Vorzugsweise hat das Polyethylenterephthalat eine DSC-Schmelzenthalpie im ersten Durchgang kleiner als 70 J/g, insbesondere kleiner als 65 J/g.

Das Polyethylenterephthalat kann als Granulat vorliegen, und die mittlere Granulatgrösse kann dabei zwischen 0.4 und 3mm, bevorzugterweise zwischen 0.7 und 2mm und insbesondere zwischen 0.8 und 1.4mm liegen, wobei das Granulat zweckmässigerweise aus massiven Partikeln besteht, die eine definierte Form, wie z.B. zylinderförmig, kugelförmig, tropfenförmig oder kugelähnlich, aufweisen.

Der Polymerisationsgrad des Polyethylenterephthalats kann zwischen 120 und 250, insbesondere zwischen 145 und 180 liegen, und der Comonomergehalt kann weniger als 3.5mol% betragen.

Das erfindungsgemässe Polyethylenterephthalat eignet sich für die Herstellung von Hohlkörpern im Spritzgussverfahren insbesondere dann, wenn der Polymerisationsgrad zwischen 80 und 150, insbesondere zwischen 100 und 130 liegt.

Das erfindungsgemässe Verfahren zur Herstellung eines Polyethylenterephthalats, insbesondere des weiter oben beschriebenen Polyethylenterephthalats, umfasst einen Schritt a) zum Herstellen einer Polykondensat-Prepolymerschmelze mit einem Polymerisationsgrad zwischen 10 und 50 aus einer Diol-Komponente, die zu 95 mol-% bis 100 mol-% aus Ethylenglykol besteht, und einer Dicarbonsäure-Komponente, die zu 95 mol-% bis 100 mol-% aus Terephthalsäure besteht, wobei der Gesamtgehalt an Comonomer zwischen 1 und 7% liegt, einen Schritt b) zum Formen von Granulaten und Verfestigen der Polykondensat-Prepolymerschmelze mit einer mittleren Granulatgrösse zwischen 0.2 und 3 mm, einen Schritt c) zum Anheben des Kristallisationsgrades der Prepolymergranulate und einen Schritt d) zum Anheben des Molekulargewichtes der Granulate mittels Festphasen-Polykondensation für 6-30 h, wobei erfindungsgemäss im Schritt d) eine Behandlungstemperatur von 220°C nicht überschritten wird.

Vorzugsweise umfasst der Schritt d) einen Teilschritt des Aufheizens unter Einwirkung eines Prozessgases und einen Teilschritt der Nachkondensationsreaktion unter Einwirkung eines Prozessgases, wobei der Teilschritt des Aufheizens zumindest anfänglich unter Verwendung eines sauberen oder zumindest teilweise gereinigten Prozessgases erfolgt.

Ähnlich kann der Schritt d) einen Teilschritt des Aufheizens unter Einwirkung eines Prozessgases und einen Teilschritt der Nachkondensationsreaktion unter Einwirkung eines Prozessgases umfassen, und der Teilschritt der Nachkondensationsreaktion kann zumindest anfänglich unter Verwendung eines sauberen oder zumindest teilweise gereinigten Prozessgases erfolgen.

Zweckmässigerweise erfolgt der Teilschritt der Nachkondensationsreaktion in einem Schachtreaktor, der zumindest einen Gaseintritt im oberen Drittel des Reaktors aufweist.

Vorzugsweise erfolgt das Verfahren kontinuierlich und erfolgt der Teilschritt der Nachkondensationsreaktion unter Einwirkung eines Prozessgases, wobei die Gasmenge zu Produktmenge (mg/mp) zwischen 0.1 und 1.4 insbesondere zwischen 0.3 und 0.8 beträgt.

Vorzugsweise liegt der DSC-Schmelzpunkt im zweiten Durchgang, gemessen an einem Granulat nach dem Verfahrensschritt b), zumindest 2°C unter dem DSC-Schmelzpunkt im zweiten Durchgang, gemessen an einem Granulat nach dem Verfahrensschritt d).

Vorzugsweise ist die Polykondensat-Prepolymerschmelze eine niederviskose Polykondensat-Prepolymerschmelze mit einem Polymerisationsgrad zwischen 10 und 50, insbesondere zwischen 15 und 35.

### Polyethylenterephthalat

Bei dem Polyethylenterephthalat handelt es sich um ein kristallisierbares, thermoplastisches Polyester, das durch eine Polykondensationsreaktion unter Abspaltung niedermolekularer Reaktionsprodukte gewonnen wird. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im wesentlichen ist das so gewonnene Polyester linear, wobei eine geringe Anzahl an Verzweigungen entstehen kann.

Das Polyethylenterephthalat wird aus seinen Monomeren, einer Diol-Komponente und einer Dicarbonsäure-Komponente, gewonnen. Erfindungsgemäss bestehen die Diol-Komponenten zu mehr als 95 mol-%, insbesondere zu mehr als 97 mol-% aus Ethylenglykol (1 ,2 Ethandiol) und die Dicarbonsäure-Komponenten zu mehr als 95 mol-%, insbesondere zu mehr als 97 mol-% aus Terephthalsäure, wobei der Copolymergehalt insgesamt zwischen 1 und 7mol% insbesondere zwischen 1.5 und 5mol% liegt. Anstelle der Dicarbonsäure kann auch ihr entsprechender Dimethylester eingesetzt werden. Als Comonomere kommen weitere lineare, zyklische oder aromatische Diol- und Dicarbonsäureverbindungen in Frage. Typische Comonomere sind Diethylenglykol (DEG), Isopthalsäure (IPA) oder 1 ,4-Bis-hydroxymethyl-cyclohexan (CHDM).

Eine besondere Ausführung der Erfindung sieht vor, dass der Comonomeranteil der Diolkomponente zur Hauptsache (zu mehr als 50%) aus DEG besteht.

Der Comonomergehalt entspricht der Summe des Diol-Comonomergehaltes und des Dicarbonsäure-Comonomergehaltes.

Der Diol-Comonomergehalt wird bestimmt als Anzahl mol der Diol-Comonomere bezogen auf die gesamte Anzahl mol der Diole.

Der Dicarbonsäure-Comonomergehalt wird bestimmt als Anzahl mol der Dicarbonsäure-Comonomere bezogen auf die gesamte Anzahl mol der Dicarbonsäuren.

Bei dem Polyethylenterephthalat kann es sich um ein Neumaterial oder um ein Rezyklat handeln.

Dem Polyethylenterephthalat können Additive zugegeben werden. Als Additive eignen sich z.B. Katalysatoren, Farbstoffe und Pigmente, UV-Blocker, Verarbeitungshilfsmittel, Stabilisatoren, Schlagzähmodifikatoren, Schäummittel chemischer und physikalischer Art, Füllstoffe wie z.B. Nukleierungsmittel, Barriere- oder mechanische Eigenschaften verbessernde Partikel, verstärkende Körper, wie Kugeln oder Fasern, sowie reaktive Substanzen, wie z.B. Sauerstoffabsorber, Acetaldehydabsorber oder molekulargewichtserhöhende Substanzen usw.

### Flüssigphasen-Polymerisation

Die Polyestermonomere werden in einem ersten Schritt in flüssiger Phase zu einem Prepolymer polymerisiert bzw. polykondensiert. Üblicherweise erfolgt die Herstellung der Prepolymerschmelze in einem kontinuierlichen Prozess, wobei auf eine Veresterungsstufe eine Prepolykondensationsstufe folgt. Im konventionellen Polyesterherstellprozess folgt eine Polykondensationsstufe im Hochviskositätsreaktor (auch Finisher genannt). (Vergleiche z.B.: Modern Polyesters, Wiley Series in Polymer Science, Edited by John Scheirs, J. Wiley & Sons Ltd, 2003; Kapitel 4.2). Die Polyesterherstellung kann auch in einem Batch-Prozess erfolgen (Vergleiche z.B.: Modern Polyesters, Wiley Series in Polymer Science, Edited by John Scheirs, J. Wiley & Sons Ltd, 2003; Kapitel 4.1)

Erfindungsgemäss wird die oben erwähnte Polykondensationsstufe im Hochviskositätsreaktor weggelassen. Dadurch entsteht ein niedrigviskoses Polyesterprepolymer mit einem Polymerisationsgrad (DP), der deutlich unter dem Polymerisationsgrad des Polykondensates nach der nachfolgenden Festphasenbehandlung liegt. Üblicherweise liegt der Polymerisationsgrad des niedrigviskosen Prepolymer unter 60%, insbesondere unter 50% des Polymerisationsgrades des in der Festphase nachkondensierten Polyesters. Erfindungsgemäss liegt der Polymerisationsgrad des niedrigviskosen Prepolymers zwischen 10 und 50, insbesondere zwischen 15 und 35.

Eine weitere Alternative bietet das Verwenden bereits polykondensierter Polyethyleneterephthalate die durch Aufschmelzen oder Aufschmelzen und Depolymerisieren auf das geeignet Viskositätsniveau gebracht werden.

Die Mengen der Diol-Komponenten und der Dicarbonsäure-Komponenten werden so gewählt, dass ein Prepolymer mit einem Endgruppenverhältnis COOH : OH = 2:1 bis 1:30, insbesondere 1:1 bis 1:10, entsteht, wobei für das optimale Endgruppenverhältnis die Bedingungen in den weiteren Herstellschritten berücksichtigt werden müssen. So sind z.B. für Prepoylmere mit einem Polymerisationsgrad unter 35 die Endgruppenverhältnisse COOH : OH = 1 :5 bis 1 :30, insbesondere 1 :10 bis 1 :25, zu bevorzugen.

Zur Berechnung des Polymerisationsgrades aus dem IV-Wert von Polyethylenterephthalat wird die Beziehung aus US 5 532 333, Stouffer et.al. DP=155.5*IV^1.466 verwendet.

Der IV-Wert gibt dabei die Lösungsviskosität an und wird nach folgender Vorschrift bestimmt:

Zur Messung der Lösungsviskosität wird eine Mischung aus Phenol/Dichlorbenzol (50:50 Gew.%) als Lösungsmittel benutzt. Die Polyesterprobe wird während 10 Minuten bei 130°C mit einer Konzentration von 0.5% (0.5 g/dl) aufgelöst. Die Messung der relativen Viskosität (RN.) wird bei 25°C mit einem Ubbelohde-Viskosimeter (nach DIN Anweisung Nr. 53728, Teil 3 vom Januar 1985) durchgeführt.

Die relative Viskosität ist der Quotient aus der Viskosität der Lösung und der Viskosität des reinen Lösungsmittels, welcher mit dem Verhältnis der entsprechenden Kapillardurchflussgeschwindigkeit vergleichbar ist. Mit der Gleichung von Huggins wird der Wert der intrinsischen Viskosität aus der gemessenen relativen Viskosität berechnet:

$$I.V. = \frac{\sqrt{1 + 4K_H(R.V.-1)} - 1}{2 \cdot c \cdot K_H}$$

Mit den obigen Messmethoden (Polymerkonzentration C=0,5.g/dl und der Huggins Konstante KH=0.35) wird die Gleichung:

$$I.V. = \frac{\sqrt{1 + 1.4(R.V.-1)} - 1}{0.35} \qquad (dl/g)$$

Die Flüssigphasenpolymerisation findet üblicherweise bei erhöhter Temperatur statt, wodurch das Prepolymer als Prepolymerschmelze anfällt. Die Prepolymerschmelze kann aber auch durch Aufschmelzen eines zuvor verfestigten Prepolymers erzeugt werden. Als Prepolymerschmelze kommen auch Gemische verschiedener Polyethylenterephthalatströme in Frage, wobei auch rezyklierte Rohstoffe eingesetzt werden können.

**Granulation**

Bei der Granulation wird die Prepolymerschmelze in eine definierte Form überführt und verfestigt. Ein Prozess, der als Granulation bezeichnet wird.

Bei der Granulation wird die Polykondensatschmelze z.B. durch eine Düse mit einer Öffnung (Loch) oder einer Vielzahl von Öffnungen gepresst und geschnitten oder vertropft.

Die Düsenöffnungen sind üblicherweise rund, können aber auch ein anderes Profil, wie z.B. schlitzförmige Öffnungen darstellen. Es ist darauf zu achten, die Produktflussmenge pro Düsenloch zeitlich und örtlich in einem engen Bereich zu halten, wobei die Standardabweichung der einzelnen Produktflussmengen zwischen 0.1 und 10% gehalten werden soll. Um dies zu erreichen, kann je nach Position eines Düsenloches deren Durchmesser oder Länge variiert sein. Gleichzeitig ist auf möglichst gleichmässige Anströmbedingungen (Druck, Geschwindigkeit, Temperatur, Viskosität usw.) der einzelnen Düsenlöcher zu achten.

Das Schneiden kann sowohl direkt am Düsenaustritt erfolgen oder aber erst nach Durchlaufen einer Behandlungsstrecke.

Durch die Abkühlung wird die Polykondensatschmelze verfestigt. Dies kann mit Hilfe eines flüssigen Kühlmediums (z. B. Wasser, Ethylenglykol) oder gasförmigen Kühlmediums (z. B. Luft, Stickstoff, Wasserdampf) erfolgen, oder durch Kontakt mit einer kalten Oberfläche, wobei auch Kombinationen der Kühlmedien denkbar sind.

Die Abkühlung kann sowohl gleichzeitig, wie auch vor oder nach dem Formen zu Partikeln statt finden.

Liegt eine Prepolymerschmelze aus einem konventionellen Polyesterherstellprozess vor, so werden Granulationsprozesse wie Stranggranulation, Wasserringgranulation, Unterwassergranulation oder Kopfgranulation (auch hot face - Granulation) verwendet.

Liegt eine niederviskose Prepolymerschmelze vor, so werden Granulationsprozesse wie Vertropfung, Wasserringgranulation, Unterwassergranulation oder Kopfgranulation (auch hot face - Granulation) verwendet.

Ein Verfahren zur Herstellung von Polyestergranulaten durch Vertropfung ist z.B. im Patent DE 10204954 beschrieben, das mit in die vorliegende Erfindung eingeschlossen wird.

Die mittlere Granulatgrösse liegt zwischen 0.2mm und 3mm, bevorzugterweise zwischen 0.5mm und 2mm und insbesondere zwischen 0.85 und 1.4mm. Als mittlere Granulatgrösse gilt der statistische Mittelwert des mittleren Granulatdurchmessers, der sich aus dem Durchschnitt aus Granulathöhe, -länge und -breite ergibt. Die Granulatgrössenverteilung soll in einem engen Spektrum gehalten werden. Bevorzugterweise ist die Standardabweichung der Granulatgewichte von 100 gemessenen Granulaten zwischen 2 und 20%.

Die Granulate sollen eine definierte Granulatform, wie z.B. zylinderförmig, kugelförmig, tropfenförmig, kugelähnlich oder einer Design-Form, wie sie z.B. in EP 0541 674 vorgeschlagen ist, aufweisen, nicht aber eine unregelmässig körnige Produktform, wie sie aus einem Mahlprozess oder Brechprozess entsteht, aufweisen.
Bevorzugterweise handelt es sich um massive Granulate, d.h.: keine poröse Granulate, wie sie z.B. durch Sinterung, Schäumung und dergleichen gewonnen werden.

## Kristallisation

Das Anheben des Kristallisationsgrades der Prepolymergranulate erfolgt nach den im Stand der Technik bekannten Verfahren, üblicherweise kontinuierlich. Erfindungsgemäss soll die Kristallisation auf thermischem Weg erfolgen, wodurch ein thermisch teilkristallisiertes Polyethylenterephthalat entsteht. Weniger geeignet ist lösemittelinduzierte Kristallisation und Kristallisation durch mechanische Verstreckung.

Die Kristallisation kann sowohl während als auch nach dem Granulationsschritt statt finden. Dazu müssen die Prepolymergranulate bei einer geeigneten Kristallisationstemperatur behandelt werden. Bei der Kristallisation soll zumindest ein Kristallisationsgrad erreicht werden, der eine Behandlung in der nachfolgenden Festphasen-Polykondensation erlaubt, ohne, dass es dort zu Verklebungen oder Klumpenbildungen kommt.

Der geeignete Temperaturbereich wird ersichtlich, wenn man die Kristallisationshalbwertszeit ($t_{y_2}$) als Funktion der Temperatur aufzeichnet. Er ist nach oben und unten begrenzt durch die Temperatur, bei der die Kristallisationshalbwertszeit das ungefähr 10-Fache der minimalen Kristallisationshalbwertszeit erreicht. Da sehr kurze Kristallisationshalbwertszeiten ($t_{y_2}$) nur schwer bestimmbar sind, wird als Minimalwert $t_{y_2}$ = 1 Minute eingesetzt.

Bei Polyethylenterephthalat liegt der Temperaturbereich zwischen 100 und 220°C, und es wird ein Kristallisationsgrad von zumindest 20%, bevorzugterweise von zumindest 30% erreicht.

Liegt die Temperatur der Prepolymergranulate nach dem Granulationsschritt unterhalb der geeigneten Kristallisationstemperatur, so müssen die Prepolymergranulate aufgeheizt werden. Dies kann z.B. über eine beheizte Wand des Kristallisationsreaktors, über beheizte Einbauten im Kristallisationsreaktor, durch Strahlung oder durch Einblasen eines heissen Prozessgases erfolgen.

Die Kristallisation kann aus dem Glaszustand, das heisst nach vorübergehender Abkühlung auf eine Temperatur unterhalb der Kristallisationstemperatur, insbesondere unterhalb der Glasübergangstemperatur Tg erfolgen.

Geeignet sind auch Verfahren, bei denen die Kristallisation zumindest teilweise aus der Schmelze erfolgt, wobei ein Anstieg der Kristallinität während der Abkühlphase und/oder einer Haltephase bei erhöhter Temperatur erfolgt.

Die geeignete Kristallisationszeit ergibt sich aus der Zeit um das Produkt auf die Kristallisationstemperatur aufzuheizen plus zumindest der Kristallisationshalbwertszeit bei der gegebenen Temperatur, wobei bevorzugterweise 2-20 Halbwertszeiten zur Aufheizzeit dazugezählt werden, um eine ausreichende Vermischung zwischen kristallinem und amorphem Produkt zu erreichen.

Um ein Verkleben der kristallisierenden Prepolymergranulate zu verhindern, sollen diese relativ zueinander in Bewegung gehalten werden. Dies kann z.B. durch den Einsatz eines Rührwerkes, eines bewegten Behälters oder unter Einwirkung eines Fluidisierungsgases erfolgen.

Besonders geeignete Kristallisationsreaktoren sind Fliessbett- oder Wirbelbettkristallisatoren, da diese nicht zur Staubbildung neigen.

Gleichzeitig mit dem Anheben des Kristallisationsgrades, werden auch allfällige Reste einer Flüssigkeit aus dem Granulierprozess entfernt.

Wird im Kristallisationsprozess ein Prozessgas im Kreislauf verwendet, so muss diesem genügend Frischgas oder gereinigtes Prozessgas zugesetzt werden, um eine übermässige Anreicherung der Flüssigkeit zu verhindern. Die zur Festphasen-Polykondensation verwendeten Prozessgase können auch im Kristallisationsschritt eingesetzt werden, wobei in den unterschiedlichen Prozessstufen auch unterschiedliche Prozessgase zum Einsatz kommen können.

**Festphasen-Polykondensation**

Das Molekulargewicht der Polyethylenterephthalate, insbesondere der Polyethylenterephthalat-Granulate wird durch eine Festphasen-Polykondensation auf einen höheren Polymerisationsgrad gebracht. Erfindungsgemäss liegt der Polymerisationsgrad nach der Festphasen-Polykondensation über 80, insbesondere über 100. Üblicherweise liegt der Polymerisationsgrad nach der Festphasen-Polykondensation unter 250, insbesondere unter 180. Polyethylenterephthalate mit höherem Polymerisationsgrad werden z.B. für technische Fasern verwendet und weisen bevorzugterweise einen geringen Comonomergehalt z.B. <3.5 mol%, insbesondere <2.5mol% auf. Bei Polyethylenterephthalaten für die Herstellung von Hohlkörpern, wie z.B. Flaschen, liegt der Polymerisationsgrad nach der Festphasen-Polykondensation üblicherweise unter 150, bevorzugterweise unter 130, und der Comonomergehalt liegt üblicherweise über 3mol%, bevorzugterweise über 4mol%.

Liegt ein Granulat aus einer niederviskosen Prepolymerschmelze vor, so wird der Polymerisationsgrad auf zumindest das 1.67-fache, insbesondere zumindest das 2-fache des Prepolymers angehoben.

Die Festphasen-Polykondensation erfolgt nach den im Stand der Technik bekannten Verfahren und umfasst zumindest die Schritte des Aufheizens auf eine geeignete Nachkondensationstemperatur und der Nachkondensationsreaktion . Optional können weitere Schritte zur vorherigen Kristallisation oder nachherigen Kühlung erfolgen. Dabei können sowohl kontinuierliche als auch Batch-Prozesse zum Einsatz kommen, die z.B. in Apparaturen wie Fliessbett-, Sprudelbett- oder Festbettreaktoren sowie in Reaktoren mit Rührwerkzeugen oder sich selber bewegenden Reaktoren, wie Drehrohrofen oder Taumeltrockner, statt finden. Die Festphasen-Polykondensation kann sowohl bei Normaldruck, bei erhöhtem Druck oder unter Vakuum statt finden.

In den im Stand der Technik bekannten Verfahren, bei denen der Schritt des Aufheizens und der Schritt der Nachkondensationsreaktion durch Einwirkung eines Prozessgases erfolgen, ist die Trennung zwischen dem Schritt des Aufheizens und dem Schritt der Nachkondensationsreaktion dadurch gegeben, dass der Schritt des Aufheizens mit einer hohen Gasmenge (mg/mp =2-15 insbesondere 2.5 - 10) erfolgt, wodurch sich im wesentlichen die Temperatur des Produktes an die Temperatur des Gases annähert, und dass der Schritt der Nachkondensationsreaktion mit einer niedereren Gasmenge (mg/mp = 0.1 - 1.4, insbesondere 0.3 - 0.8) erfolgt, wodurch sich im wesentlichen die Temperatur des Gases an die Temperatur des Produktes annähert. Dabei ist mp die

Summe der Masse aller dem Prozess zugeführten Produktströme, und mg die Summe der Masse aller dem Prozess zugeführten Gasströme. Als Prozessgas kommen Luft oder Inertgase, wie z.B. Stickstoff oder CO2, sowie Gemische aus Prozessgasen in Frage. Die Prozessgas können Additive enthalten, die entweder reaktiv auf das zu behandelnde Produkt einwirken oder sich passiv auf dem zu behandelnden Produkt ablagern. Bevorzugterweise wird das Prozessgas zumindest teilweise in einem Kreislauf geführt. Um eine Beeinträchtigung der Polykondensationsreaktion zu vermindern, kann das Prozessgas von unerwünschten Produkten, insbesondere Spaltprodukten der Polykondensationsreaktionen gereinigt werden. Spaltprodukte wie Wasser Ethylenglykol oder Aldehyde (z.B. Acetaldehyd) sollen dabei auf Werte unter 100ppm insbesondere auf Werte unter 10ppm reduziert werden. Die Reinigung kann durch im Stand der Technik bekannte Gasreinigungssysteme, wie z.B. katalytische Verbrennungssysteme, Gaswäscher, Adsorptionssysteme oder Kühlfallen erfolgen.

Insbesondere der Schritt der Nachkondensation erfolgt üblicherweise mittels eines sauberen oder gereinigten Prozessgases. Eine Variante sieht vor, das saubere oder gereinigte Prozessgas im Anfangsstadium des Schrittes der Nachkondensation einzuspeisen. Eine weitere Variante sieht vor, auch den Schritt des Aufheizens zumindest anfänglich mittels eines sauberen oder zumindest teilweise gereinigten Prozessgases durchzuführen.

Eine besondere Ausführung der Erfindung sieht vor, dass der Schritt der Nachkondensationsreaktion in einem Schachtreaktor (Festbettreaktor, Bewegtbettreaktor) durch den das Polyethylenterephthalat kontinuierlich von oben nach unten fliesst, erfolgt, wobei der Festbettreaktor ein L/D von über 4 aufweist und einen Gaseintritt im oberen Drittel aufweist. Von diesem Gaseintritt kann das Prozessgas entweder nur nach oben strömen oder sowohl nach oben als auch nach unten strömen. Der Reaktor kann einen weiteren Gaseintritt am unteren Ende aufweisen, sowie einen Gasaustritt am unteren Ende oder zwischen dem unteren und dem oberen Gaseintritt.

Die erfindungsgemässe Nachkondensationstemperatur liegt unter 220°C.

Die erfindungsgemässe Nachkondensationszeit liegt im Bereich von 6-30 Stunden.

Optional kann der Schritt zur Kristallisation und der Schritt des Aufheizens auf eine geeignete Nachkondensationstemperatur gleichzeitig oder zumindest im gleichen Reaktor erfolgen, wobei der dazu verwendete Reaktor in mehrere Prozesskammern getrennt sein kann, in denen unterschiedliche Prozessbedingungen (z. B. Temperatur und Verweilzeit) vorherrschen können. Dabei ist es von Vorteil, wenn die Aufheizrate, mit der das Polykondensat in den Nachkondensationstemperaturbereich aufgeheizt wird, ausreichend gross ist, um eine übermässige Kristallisation vor Beginn der Polykondensationsreaktion zu verhindern. Bei PET sollte die Aufheizrate zumindest 10°C/Min, bevorzugterweise zumindest 50°C/min betragen.

Besondere Beachtung findet der Gehalt an leichtflüchtigen Carbonyl-Verbindungen wie z.B. Acetaldehyd oder Formaldehyd im Polyester nach der Festphasen-Polymerisation. Werte zwischen 0 und 2 ppm, insbesondere zwischen 0 und 1 ppm werden angestrebt, wobei ein Polyethylenterephthalat hergestellt aus einem niedrigviskosen Prepolymer besonders geringe Werte aufweist.

**Produkt-Herstellung**

Nach Abschluss der Festphasen-Polykondensation können die Polykondensate zu verschiedenen Produkten wie z.B. Fasern, Bändern, Folien oder Spritzgussteilen verarbeitet werden.

PET wird zu einem grossen Teil zu Hohlkörpern wie z.B. Flaschen verarbeitet.

**Charakterisierung durch DSC**

Zur Produktcharakterisierung wird ein teilkristallines Polyethylenterephthalat nach der Festphasen-Polykondensation verwendet.

Zwei verschiedene Arten von Schmelzpunkten können mittels einer DSC-Messung bestimmt werden:

1. Der DSC-Schmelzpunkt, der sich aufgrund der Behandlung des Produktes ergibt, wird im ersten Durchgang einer DSC-Messung bestimmt. Der Wert gibt Informationen über die Bedingungen, die in einem Aufschmelzprozess herrschen müssen, um das Polyester zu verarbeiten.

2. Der DSC-Schmelzpunkt, der sich aufgrund der Produktstruktur (chemische Zusammensetzung, Molekulargewicht, Molekulargewichtsverteilung) ergibt, wird im zweiten Durchgang einer DSC-Messung bestimmt. Der Wert dient einerseits zur Materialcharakterisierung, gibt aber auch Informationen über die rheologischen Eigenschaften des Polyesters, die dessen Verarbeitbarkeit beeinflussen.

Zur Bestimmung der DSC-Schmelzpunkte erfolgt im ersten Durchgang eine Aufheizung von 10°C/Min auf 290°C. Nach einer Haltezeit von 1 Minute erfolgt eine Abkühlung mit maximaler Abkühlrate. Im zweiten Durchgang erfolgt wiederum eine Aufheizung von 10°C/Min auf 290°C.

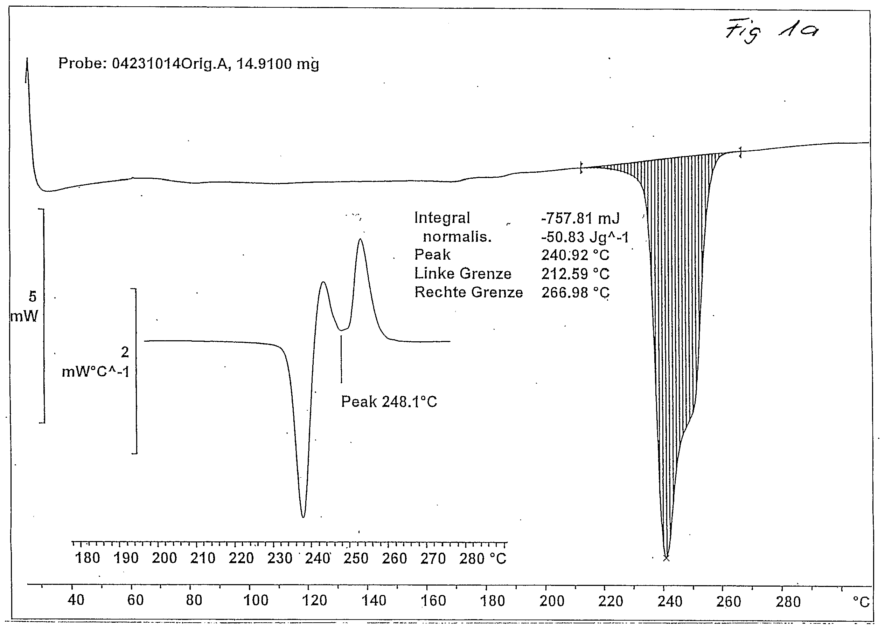

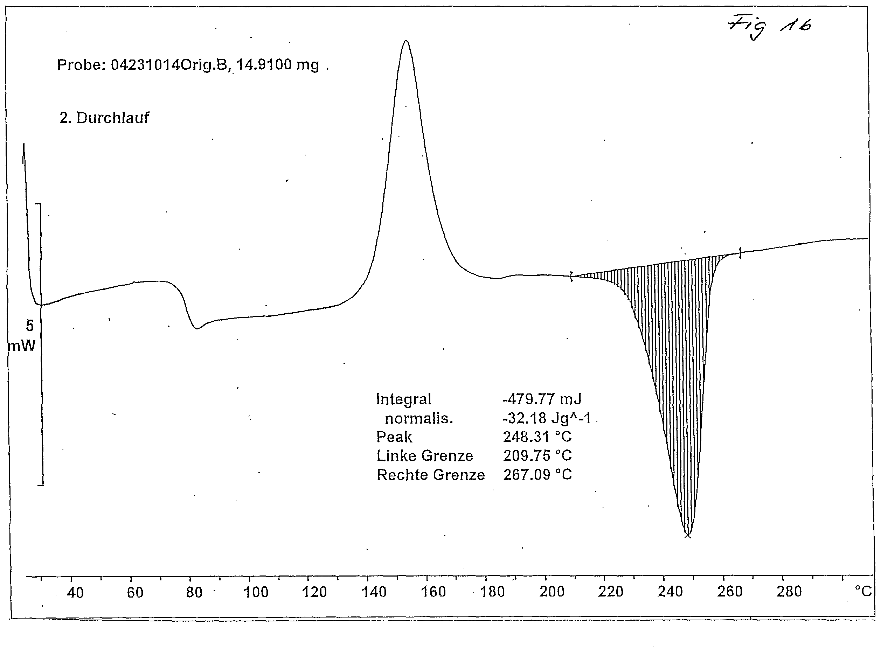

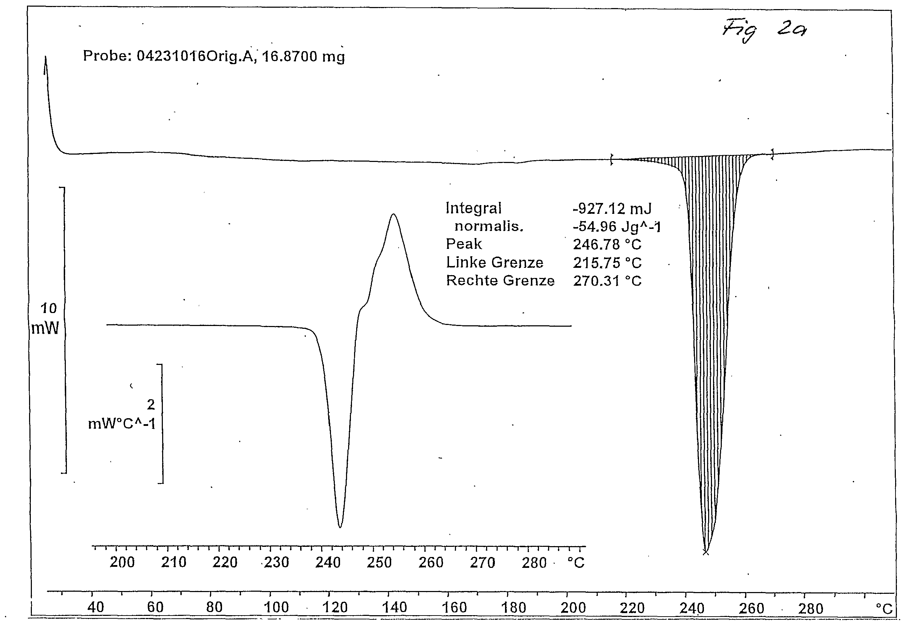

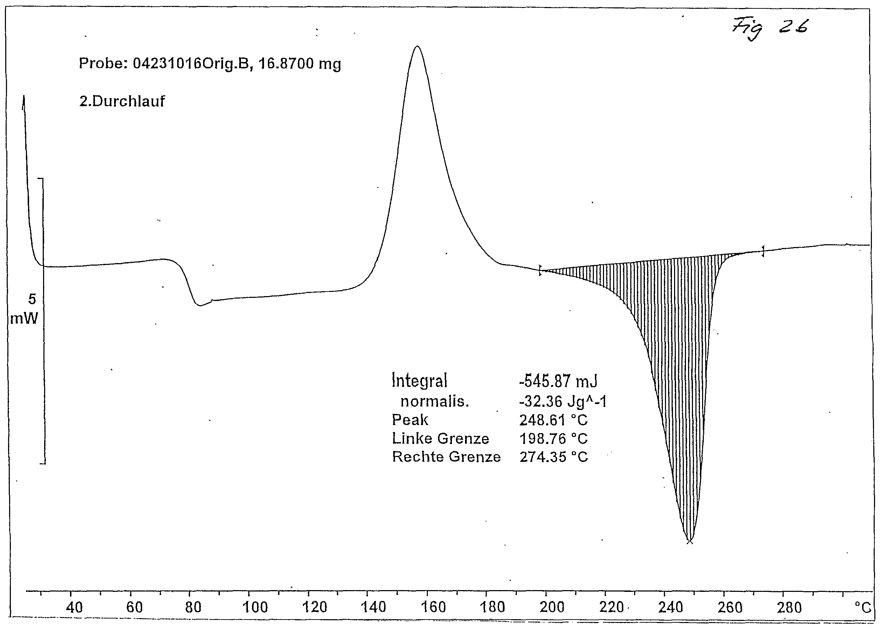

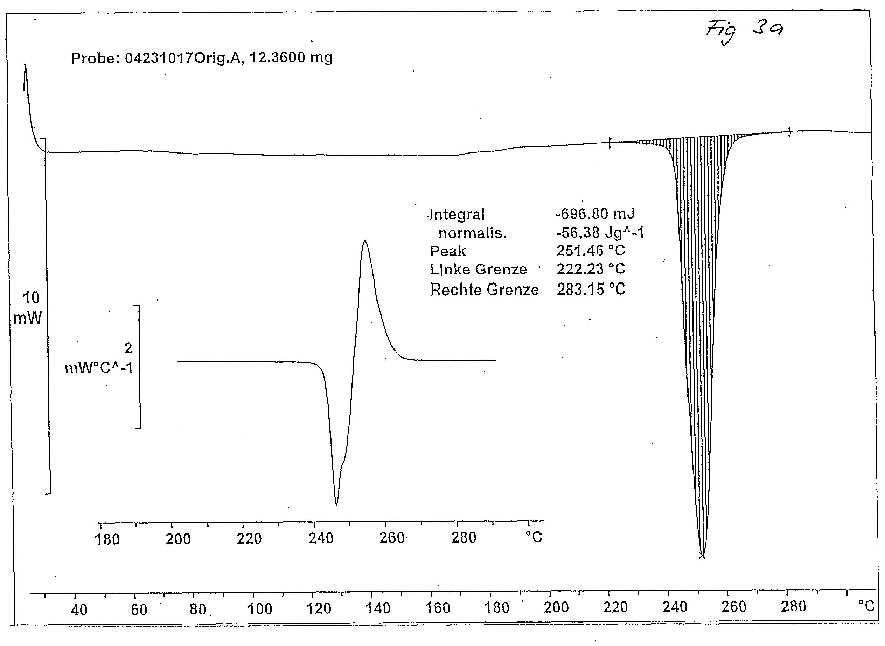

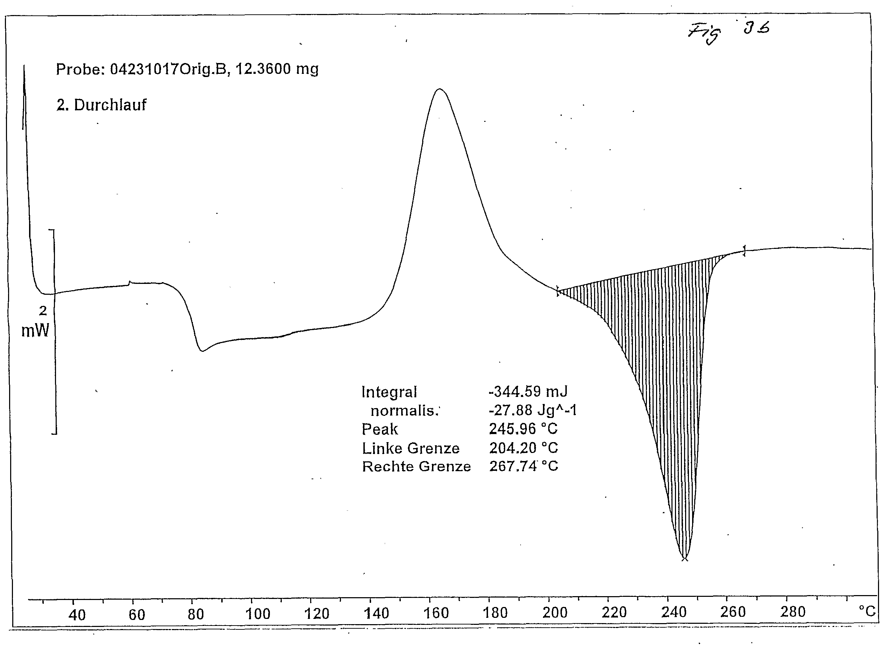

Der DSC-Schmelzpunkt entspricht der Temperatur, bei der der endotherme Schmelzpeak sein Maximum aufweist. Das Polyethylenterephthalat soll im wesentlichen einen einzelnen Schmelzpeak aufweisen, wobei bei einem Polyethylenterephthalat mit einem Doppelpeak oder Seitenpeak (auch als Schulter oder verdeckte Schulter benannt), der mehr als 5% der Höhe des Hauptpeaks erreicht, der Peak bei der höheren Temperatur berücksichtigt wird. Eine Schulter oder verdeckte Schulter wird ersichtlich durch eine zusätzliche deutliche Stufe oder ein zusätzliches Maximum in der ersten Ableitung des Schmelzpeaks. (Vergleiche Figuren 1-3)

Die Schmelzenthalpie entspricht der Fläche zwischen der Basislinie und dem Schmelzpeak, begrenzt durch die linke und rechte Grenze des Peaks, wobei ein Doppelpeak oder Seitenpeak mit berücksichtigt wird.

Die Schmelzenthalpie im ersten Durchgang eines erfindungsgemässen Polyethylenterephthalates ist bevorzugterweise kleiner als 70 J/g insbesondere kleiner als 65 J/g.

Der DSC-Schmelzpunkt eines erfindungsgemässen Polyethylenterephthalates nach der Festphasenpolykondensation im ersten Durchgang und im zweiten Durchgang liegt unter einer vom Comonomergehalt abhängigen Schmelztemperatur (Tm) eines vergleichbaren Standard-Polyethylenterephthalates.

Das vergleichbare Standard-Polyethylenterephthalat hat dabei einen vergleichbaren Polymerisationsgrad und ist hergestellt, nach dem heute grosstechnisch am meisten umgesetzten Verfahren, bestehend aus einer Polymerisation in flüssiger Phase auf einen Polymerisationsgrad von 65 - 80, gefolgt von einer Granulation, wobei das Polykondensat mit Wasser als Kühlmedium unter seine Glasübergangstemperatur abgekühlt wird und Granulate mit 10 - 30mg Masse anfallen, und einer anschliessenden Festphasenpolykondensation.

Die vom Comonomergehalt abhängige Schmelztemperatur (Tm) eines Standard-Polyethylenterephthalat.es wird z.B. in EP 0532 988 beschrieben, woben die Angabe der Comonomere in Gewichtsprozent erfolgt. Umgerechnet auf mol% ergibt sich:

$$Tm = 261\,°C - 2.31 * mol\%\ DEG - 2.6 * mol\%\ IPA - 3.42 * mol\%\ CHDM.$$

Andere Literaturstellen gehen von einer einheitlichen Schmelzpunktserniedrigung unabhängig von der Art des Comonomeren aus. (siehe S. Sakellarides, ANTEC 96, p938ff).

Daraus ergibt sich allgemein : Tm = T0 - x * mol% Comonomer.

Die Beziehung aus EP 0 532 988 lässt sich im Bereich von 1 bis 8% Comonomergehalt annähern mit T0 = 262°C und x = 3.

Wird CHDM ausgeschlossen, erfolgt die Annäherung durch T0 = 261 °C und x = 2.5°C.

Unter Verwendung dieser Annäherungen ergibt sich für das erfindungsgemässe Polyethylenterephthalat: Tm < 260°C - 2.5 * mol% Comonomergehalt, wenn vor allem IPA und DEG berücksichtigt werden oder Tm < 260°C - 3 * mol% Comonomergehalt in allgemeiner Form.

Der DSC-Schmelzpunkt im zweiten Durchgang eines erfindungsgemässen Polyethylenterephthalates nach der Festphasen-Polykondensation ist bevorzugterweise kleiner als der DSC-Schmelzpunkt im zweiten Durchgang seines Prepolymers vor der Festphasenpolykondensation, wobei der Unterschied zumindest 2°C insbesondere zumindest 3°C beträgt.

**Beispiele**

Vergleichsbeispiel 1

Ein Polyethylenterephthalat mit einem Anfangspolymerisationsgrad von 77, mit 2mol% IPA ca. 2.5mol% DEG Comonomergehalt und einer mittleren Granulatgrösse von 2.5mm wurde während 20 Minuten bei 175°C kristallisiert und abgekühlt, anschliessen während 60 Minuten auf 215°C aufgeheizt, 8 Stunden bei 215°C unter Stickstoff behandelt und rasch abgekühlt.

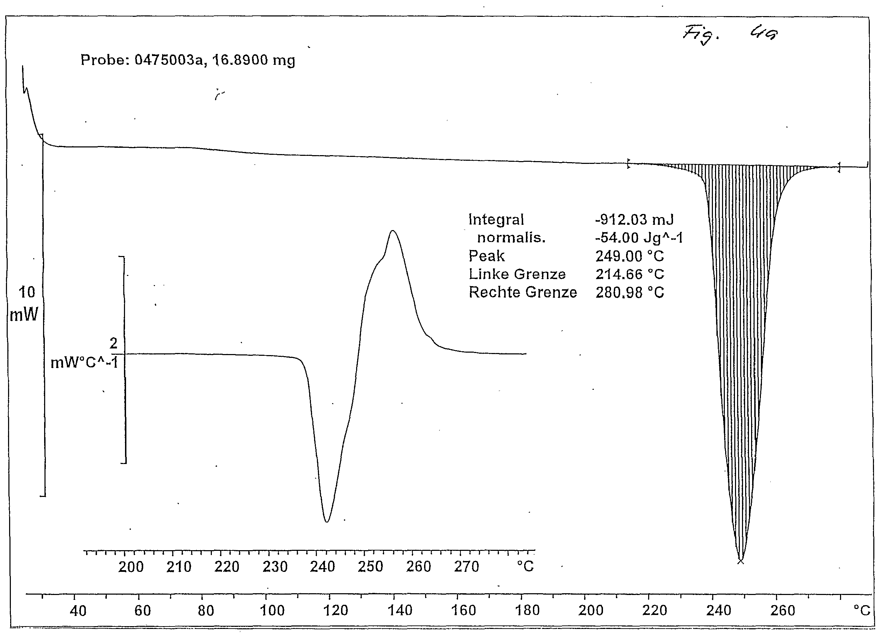

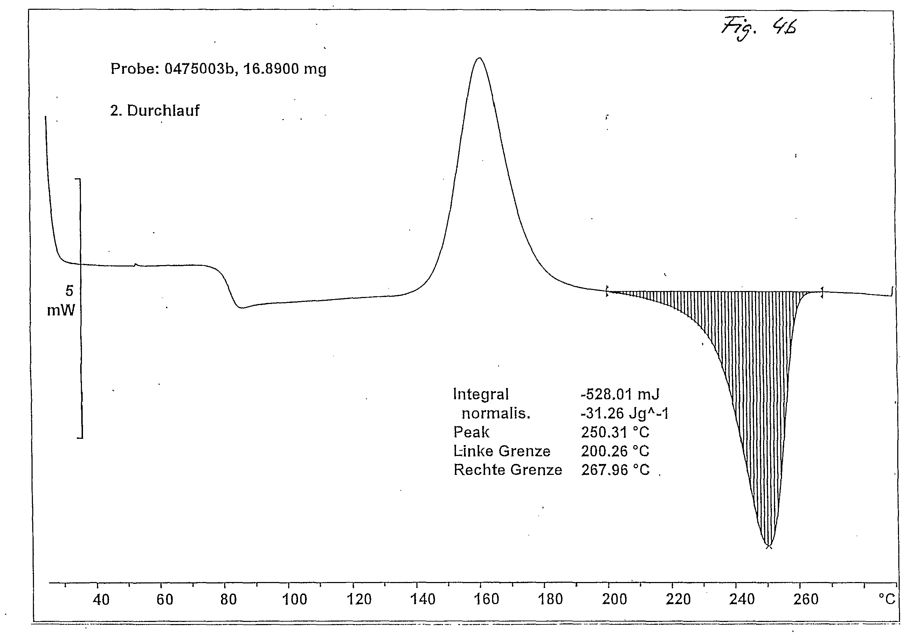

Es wurden DSC-Schmelzpunkte von 254°C im ersten Durchgang und 250°C im zweiten Durchgang gemessen, was im wesentlichen dem berechneten Schmelzpunkt von 249.75°C entspricht und im ersten Durchgang die typische Verschiebung durch die SSP Behandlung anzeigt, (vergleiche Figur 4)

Beispiel 1

Ein Polyethylenterephthalat mit einem Anfangspolymerisationsgrad von 25, mit 2mol% IPA, ca. 2.5mol% DEG Comonomergehalt und einer mittleren Granulatgrösse von 0.4mm wurde aus der Schmelze auf 170°C abgekühlt, während 2 Stunden bei 170°C kristallisiert und abgekühlt, anschliessend mit 2°C pro Minute aufgeheizt auf 215°C, 15 Stunden bei 215°C unter Stickstoff behandelt und rasch abgekühlt.

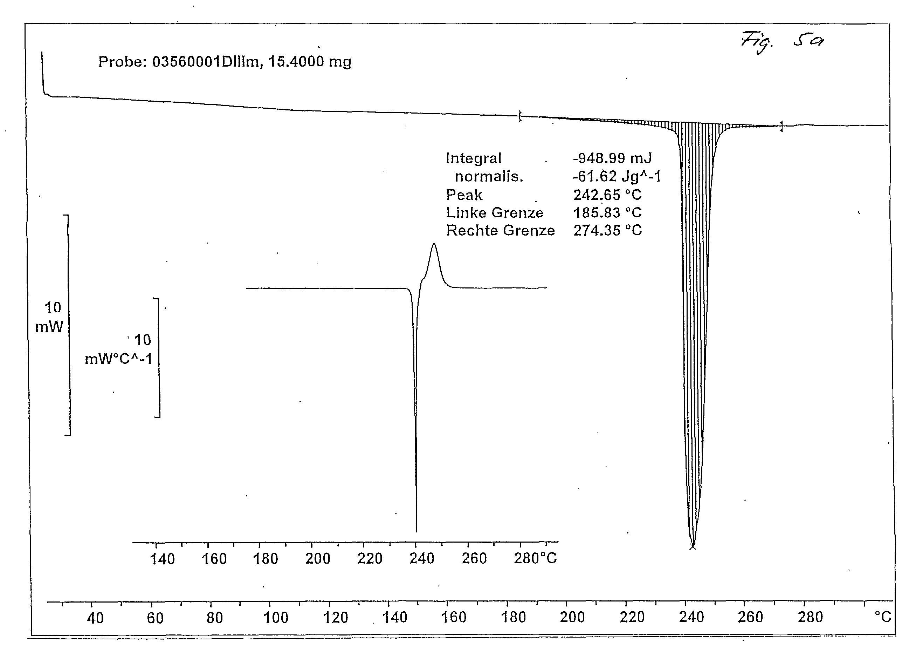

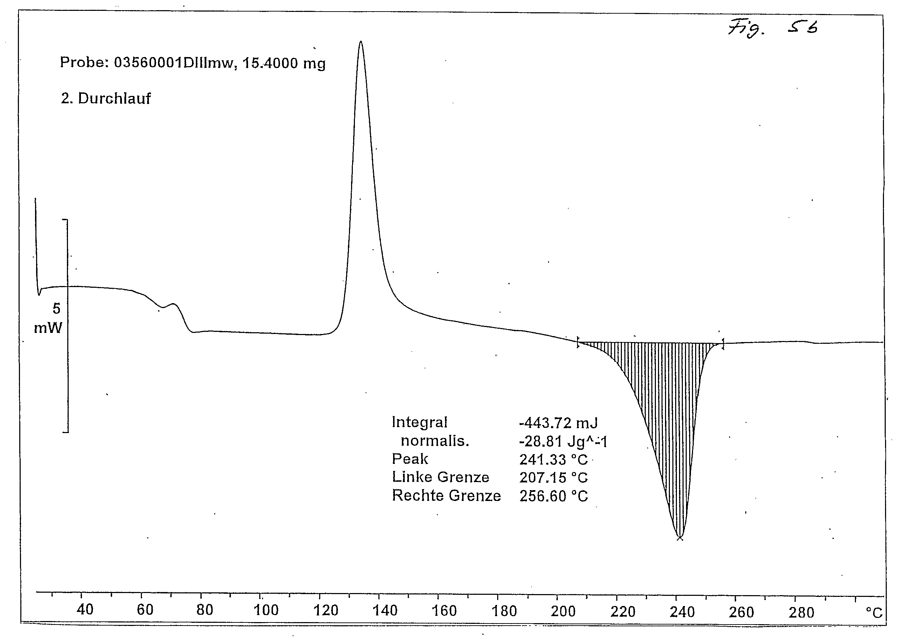

Es wurden DSC-Schmelzpunkte von 244°C im ersten Durchgang und 241 °C im zweiten Durchgang gemessen, was deutlich unter dem berechneten Schmelzpunkt von 249.75°C liegt, (vergleiche Figur 5)

Beispiel 2

Ein Polyethylenterephthalat mit einem Anfangspolymerisationsgrad von 25, mit 2mol% IPA, ca. 2.5mol% DEG Comonomergehalt und einer mittleren Granulatgrösse von 0.4mm wurde aus der Schmelze auf 170°C abgekühlt, während 10 Sekunden bei 170°C kristallisiert und abgekühlt, anschliessend mit 100°C pro Minute aufgeheizt auf 215°C, 15 Stunden bei 215°C unter Stickstoff behandelt und rasch abgekühlt.

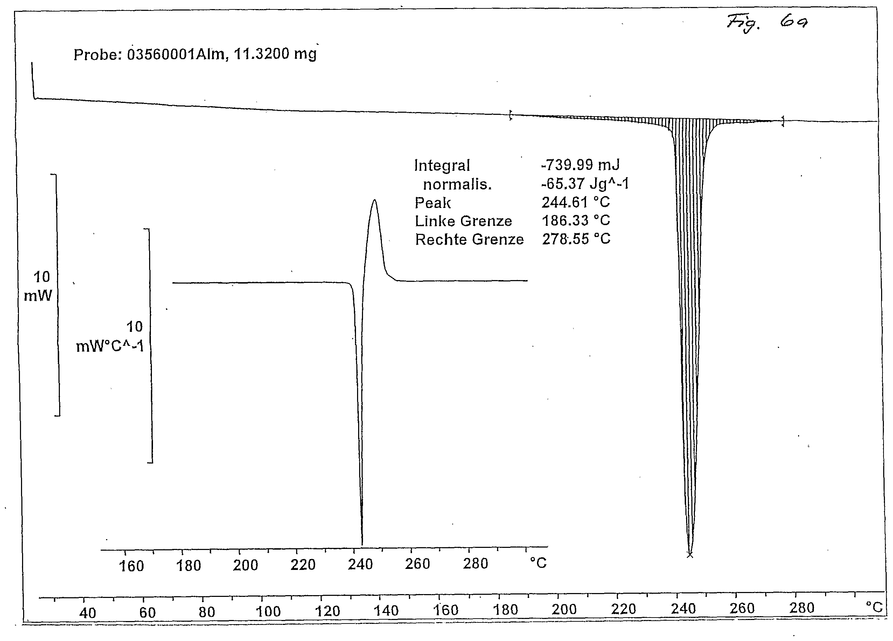

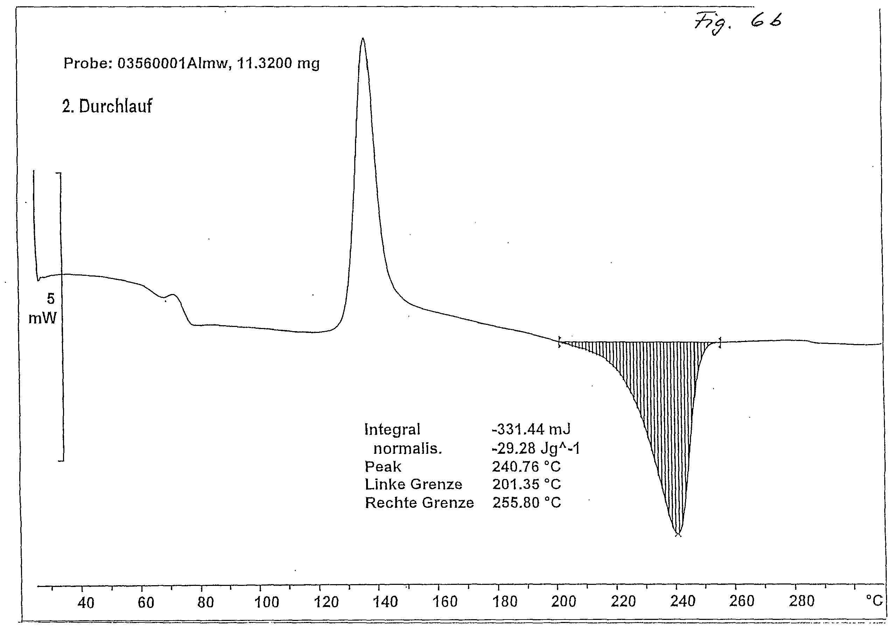

Es wurden DSC-Schmelzpunkte von 245°C im ersten Durchgang und 241°C im zweiten Durchgang gemessen, was deutlich unter dem berechneten Schmelzpunkt von 249.75°C liegt, (vergleiche Figur 6)

**Figuren**

Figuren 1 bis 3 zeigen den Verlauf des Schmelzpeaks im DSC in Abhängigkeit von der Behandlungszeit in einer Festphasenpolykondensation bei 215°C für ein Polyethylenterephthalat mit einem Anfangspolymerisationsgrad von 53, mit 2mol% IPA, ca. 2.5mol% DEG Comonomergehalt. Daraus ersichtlich ist die Auswertung des Seitenpeaks mittels erster Ableitung.

Die Ergebnisse sind in Tabelle 1 zusammengefasst.

Figur 1a    zeigt den ersten Durchgang inklusive der ersten Ableitung der Probe nach 4 Stunden Behandlungszeit. Es ist ein deutlicher Schulterpeak (T = 248.1 °C) erkennbar.

Figur 1b    zeigt den zweiten Durchgang der Probe nach 4 Stunden Behandlungszeit.

Figur 2a    zeigt den ersten Durchgang inklusive der ersten Ableitung der Probe nach 12 Stunden Behandlungszeit. In der Ableitung ist eine Stufe (~249.2°C) unmittelbar nach dem Hauptpeak sichtbar.

Figur 2b    zeigt den zweiten Durchgang der Probe nach 12 Stunden Behandlungszeit,

Figur 3a    zeigt den ersten Durchgang inklusive der ersten Ableitung der Probe nach 28 Stunden Behandlungszeit. In der Ableitung ist keine Stufe nach dem Hauptpeak (T = 251.5°C) erkennbar.

Figur 3b    zeigt den zweiten Durchgang der Probe nach 28 Stunden Behandlungszeit,

Figur 4      zeigt die DSC Kurven für das Vergleichsbeispiel 1.

Figur 4a    zeigt den ersten Durchgang inklusive der ersten Ableitung der Probe. In der Ableitung ist eine Stufe (~254°C) nach dem Hauptpeak (249.0°C) sichtbar,

Figur 4b     zeigt den zweiten Durchgang der Probe,

Figur 5     zeigt die DSC Kurven für das Beispiel 1.

Figur 5a     zeigt den ersten Durchgang inklusive der ersten Ableitung der Probe. In der Ableitung ist eine Stufe (~244°C) unmittelbar nach dem Hauptpeak (242.7°C) sichtbar.

Figur 5b     zeigt den zweiten Durchgang der Probe,

Figur 6     zeigt die DSC Kurven für das Beispiel 2.

Figur 6a     zeigt den ersten Durchgang inklusive der ersten Ableitung der Probe. In der Ableitung ist keine Stufe sichtbar sondern nur der Hauptpeak (244.6°C).

Figur 6b     zeigt den zweiten Durchgang der Probe.

Tabelle 1

| DSC Scan | | Fig. 1a | Fig. 2a | Fig. 3a |
|---|---|---|---|---|
| | | | | |
| Behandlunqszeit | | 4 Stunden | 12 Stunden | 28 Stunden |
| Polvmerisationsgrad | | 95 | 152 | 220 |
| | | | | |
| DSC 1. Durchgang | | | | |
| | Schmelzpeak 1 | 240.9 °C | 246.8 °C | 251.5 °C |
| | Höhe | 9.2mm | 13.9 mW | 11.9 mW |
| | Schmelzpeak 2 | 248.1 °C | 249.2 °C | |
| | Höhe | 6.0 mW (65%) | 13 mW (94%) | |
| DSC 2. Durchgang | | | | |
| | Schmelzpeak 1 | 248.3 °C | 248.6 °C | 246.0 °C |
| | | | | |
| Gültige DSC Schmelztemperatur | | | | |
| | 1. Durchgang | 248.1 °C | 249.2 °C | 251.5 °C |
| | 2. Durchgang | 248.3 °C | 248.6 °C | 246.0 °C |

**Patentansprüche**

1. Teilkristallines Polyethylenterephthalat mit einem Polymerisationsgrad grösser als 80, insbesondere grösser als 100, hergestellt aus

    a) einer Diol-Komponente, die zu 95 mol-% bis 100 mol-% aus Ethylenglykol besteht, und

    b) einer Dicarbonsäure-Komponente, die zu 95 mol-% bis 100 mol-% aus Terephthalsäure besteht, wobei der Gesamtgehalt an Comonomer zwischen 1 und 7% liegt,

wobei in einem ersten Schritt die Diol-Komponente und die Dicarbonsäure-Komponente in flüssiger Phase zusammengegeben werden, um ein niederviskoses Prepolymer mit einem Polymerisationsgrad zwischen 10 und 50 zu erhalten, und das Prepolymer anschliessend zu Granulaten mit einer mittleren Granulatgrösse zwischen 0.2 und 3 mm granuliert und die Granulate einer Festphasen-Polykondensation bei einer Temperatur von weniger als 220°C für 6-30 h unterzogen werden, um ein Polyethylenterephthalat zu erhalten, wobei der DSC-Schmelzpunkt des Polyethylenterephthalats, gemessen mit einer Aufheizrate von 10°C/min im ersten Durchgang und im zweiten Durchgang, unterhalb einer vom Comonomergehalt abhängigen Schmelztemperatur (Tm) eines vergleichbaren Standard-Polyethylenterephthalates liegt, welches über Festphasen-Polykondensation aus einem Prepolymer mit einem Polymerisationsgrad zwischen 65 und 80, das zu Granulaten mit einer Masse von 10 bis 30 mg geformt und mit Wasser unter seine Glasübergangstemperatur gekühlt worden war, hergestellt wurde, wobei $Tm = T0 - 2.5°C * \%$ Comonomergehalt (in mol%) entspricht und TO kleiner/gleich 260°C beträgt, wobei der Comonomeranteil der Diolkomponente zur Hauptsache aus Diethylenglycol besteht, oder wobei Tm = TO - 3°C * % Comonomergehalt (in mol%) entspricht und T0 kleiner/gleich 260°C beträgt.

2. Polyethylenterephthalat gemäss Anspruch 1, **dadurch gekennzeichnet, dass** TO kleiner/gleich 259°C beträgt und insbesondere dass TO kleiner/gleich 257°C beträgt.

3. Polyethylenterephthalat gemäss einem der vorhergehenden Ansprüche hergestellt aus einer Diol-Komponente, die zu 97 mol-% bis 99 mol-% aus Ethylenglykol besteht, und einer Dicarbonsäure-Komponente, die zu 97 mol-% bis 100 mol-% aus Terephthalsäure besteht, wobei der Gesamtgehalt an Comonomer zwischen 1.5 und 5% liegt.

4. Polyethylenterephthalat gemäss Anspruch 3, **dadurch gekennzeichnet, dass** der DSC-Schmelzpunkt im ersten Durchgang und im zweiten Durchgang unter 245°C liegt.

5. Polyethylenterephthalat gemäss einem der vorhergehenden Ansprüche, **dadurch gekennzeichnet, dass** der DSC-Schmelzpunkt im ersten Durchgang grösser ist als der DSC-Schmelzpunkt im zweiten Durchgang.

6. Polyethylenterephthalat gemäss einem der vorhergehenden Ansprüche, **dadurch gekennzeichnet, dass** T0 im ersten Durchgang kleiner/gleich 260°C beträgt und im zweiten Durchgang kleiner/gleich 258°C beträgt.

7. Polyethylenterephthalat gemäss Anspruch 6, **dadurch gekennzeichnet, dass** T0 im ersten Durchgang kleiner/gleich 259°C beträgt und insbesondere dass T0 kleiner/gleich 257°C beträgt sowie im zweiten Durchgang kleiner/gleich 257°C beträgt und insbesondere dass T0 kleiner/gleich 255°C beträgt.

8. Teilkristallines Polyethylenterephthalat gemäss einem der vorhergehenden Ansprüche, **dadurch gekennzeichnet, dass** es sich um ein thermisch teilkristallisiertes Polyethylenterephthalat handelt.

9. Polyethylenterephthalat gemäss einem der vorhergehenden Ansprüche, **dadurch gekennzeichnet, dass** es sich um ein im wesentlichen lineares Polyethylenterephthalat handelt.

10. Polyethylenterephthalat gemäss einem der vorhergehenden Ansprüche, **dadurch gekennzeichnet, dass** das Polyethylenterephthalat eine DSC-Schmelzenthalpie im ersten Durchgang kleiner als 70 J/g, insbesondere kleiner als 65 J/g aufweist.

11. Polyethylenterephthalat gemäss einem der vorhergehenden Ansprüche, **dadurch gekennzeichnet, dass** das Polyethylenterephthalat als Granulat vorliegt und die mittlere Granulatgrösse zwischen 0.4 und 3 mm, bevorzugterweise zwischen 0.7 und 2 mm und insbesondere zwischen 0.8 und 1.4 mm liegt.

12. Polyethylenterephthalat gemäss Anspruch 11, **dadurch gekennzeichnet, dass** das Granulat aus massiven Partikeln besteht, die eine definierte Form, wie z.B. zylinderförmig, kugelförmig, tropfenförmig oder kugelähnlich, aufweisen.

13. Polyethylenterephthalat gemäss einem der vorhergehenden Ansprüche, **dadurch gekennzeichnet, dass** der Polymerisationsgrad zwischen 120 und 250, insbesondere zwischen 145 und 180 liegt und der Comonomergehalt weniger als 3.5 mol% beträgt.

14. Polyethylenterephthalat, geeignet für die Herstellung von Hohlkörpern im Spritzgussverfahren gemäss einem der vorhergehenden Ansprüche, **dadurch gekennzeichnet, dass** der Polymerisationsgrad zwischen 80 und 150, insbesondere zwischen 100 und 130 liegt.

15. Verfahren zur Herstellung eines Polyethylenterephthalats gemäss einem der vorhergehenden Ansprüche, bestehend aus den Schritten:

a) Herstellen einer Polykondensat-Prepolymerschmelze mit einem Polymerisationsgrad zwischen 10 und 50 aus einer Diol-Komponente, die zu 95 mol-% bis 100 mol-% aus Ethylenglykol besteht, und einer Dicarbonsäure-Komponente, die zu 95 mol-% bis 100 mol-% aus Terephthalsäure besteht, wobei der Gesamtgehalt an Comonomer zwischen 1 und 7% liegt,
b) Formen von Granulaten mit einer mittleren Granulatgrösse zwischen 0.2 und 3 mm und Verfestigen der Polykondensat-Prepolymerschmelze

c) Anheben des Kristallisationsgrades der Prepolymergranulate

d) Anheben des Molekulargewichtes der Granulate mittels Festphasen-Polykondensation für 6-30 h,

**dadurch gekennzeichnet, dass** im Schritt d) eine Behandlungstemperatur von 220°C nicht überschritten wird.

16. Verfahren nach Anspruch 15, **dadurch gekennzeichnet, dass** der Schritt d) einen Teilschritt des Aufheizens unter Einwirkung eines Prozessgases und einen Teilschritt der Nachkondensationsreaktion unter Einwirkung eines Prozessgases umfasst und der Teilschritt des Aufheizens zumindest anfänglich unter Verwendung eines sauberen oder zumindest teilweise gereinigten Prozessgases erfolgt.

17. Verfahren nach einem der Ansprüche 15 bis 16, **dadurch gekennzeichnet, dass** der Schritt d) einen Teilschritt des Aufheizens unter Einwirkung eines Prozessgases und einen Teilschritt der Nachkondensationsreaktion unter Einwirkung eines Prozessgases umfasst und der Teilschritt der Nachkondensationsreaktion zumindest anfänglich unter Verwendung eines sauberen oder zumindest teilweise gereinigten Prozessgases erfolgt.

18. Verfahren nach einem der Ansprüche 15 bis 17, **dadurch gekennzeichnet, dass** der Teilschritt der Nachkondensationsreaktion in einem Schachtreaktor erfolgt, der zumindest einen Gaseintritt im oberen Drittel des Reaktors aufweist.

19. Verfahren nach einem der Ansprüche 15 bis 18, **dadurch gekennzeichnet, dass** es kontinuierlich erfolgt und der Teilschritt der Nachkondensationsreaktion unter Einwirkung eines Prozessgases erfolgt, wobei die Gasmenge zu Produktmenge (mg/mp) zwischen 0.1 und 1.4, insbesondere zwischen 0.3 und 0.8 beträgt.

20. Verfahren nach einem der Ansprüche 15 bis 19, **dadurch gekennzeichnet, dass** der DSC-Schmelzpunkt im zweiten Durchgang, gemessen an einem Granulat nach dem Verfahrensschritt b), zumindest 2°C unter dem DSC-Schmelzpunkt im zweiten Durchgang, gemessen an einem Granulat nach dem Verfahrensschritt d), liegt.

21. Verfahren nach einem der Ansprüche 15 bis 20, **dadurch gekennzeichnet, dass** die Polykondensat-Prepolymerschmelze eine niederviskose Polykondensat-Prepolymerschmelze mit einem Polymerisationsgrad zwischen 15 und 35 ist.

**Claims**

1. Partially crystalline polyethylene terephthalate having a degree of polymerization larger than 80, manufactured from

   (a) a diol component which consists to 95 mol % up to 100 mol % of ethylene glycol, and
   (b) a dicarboxylic acid component, which consists to 95 mol % up to 100 mol % terephthalic acid, wherein the total comonomer content lies between 1 and 7%,

   wherein in a first step the diol component and dicarboxylic acid component are brought together in liquid phase to obtain a low viscosity prepolymer having a degree of polymerization between 10 and 50, and said prepolymer is thereafter granulated into granules having an average granule size between 0.2 mm and 3 mm, and the granules are subjected to a solid phase polycondensation at a temperature below 220°C for 6-30 h to obtain a polyethylene terephthalate, wherein the DSC melting point of said polyethylene terephthalate measured at a heat-up rate of 10° C/min in a first run and in a second run, lies below a comonomer-dependent melting temperature (Tm) of a comparable polyethylene terephthalate having been prepared via a solid state polycondensation from a prepolymer having a degree of polymerization between 65 and 80, which was formed into granules having a mass of 10 to 30 mg and which was cooled with water below its glass transition temperature, wherein $Tm = T0 - 2.5°C *\%$ comonomer content (in mol %) with T0 being smaller than/equal to 260°C, wherein the comonomer proportion of the diol component is comprised mainly of diethylene glycol, or wherein $Tm = T0 - 3°C *\%$ comonomer content (in mol %) with T0 being smaller than/equal to 260°C.

2. Polyethylene terephthalate according to claim 1, **characterized in that** T0 is smaller than/equal to 259°C, and in particular that T0 is smaller than/equal to 257°C.

3. Polyethylene terephthalate according to any of the preceding claims, manufactured from a diol component, which comprises 97 mol % up to 99 mol % of ethylene glycol, and from a dicarboxylic acid component, which comprises 97 mol % up to 100 mol % terephthalic acid, wherein the total comonomer content lies between 1.5 and 5%.

4. Polyethylene terephthalate according to claim 3, **characterized in that** the DSC melting point in the first run and in the second run lies below 245°C.

5. Polyethylene terephthalate according to any of the preceding claims, **characterized in that** the DSC melting point in the first run is larger than the DSC melting point in the second run.

6. Polyethylene terephthalate according to any of the preceding claims, **characterized in that** in the first run T0 is smaller than/equal to 260°C, and in the second run is smaller than/equal to 258°C.

7. Polyethylene terephthalate according to claim 6, **characterized in that** T0 in the first run is smaller than/equal to 259°C and in particular that T0 is smaller than/equal to 257°C, and in the second run is smaller than/equal to 257°C and especially that T0 is smaller than/equal to 255°C.

8. Partially crystalline polyethylene terephthalate according to any of the preceding claims, **characterized in that** it is a thermally partially crystallized polyethylene terephthalate.

9. Polyethylene terephthalate according to any of the preceding claims, **characterized in that** it is an essentially linear polyethylene terephthalate.

10. Polyethylene terephthalate according to any of the preceding claims, **characterized in that** the polyethylene terephthalate has a DSC melt enthalpy in the first run of smaller than 70 J/g, in particular smaller than 65 J/g.

11. Polyethylene terephthalate according to any of the preceding claims, **characterized in that** the polyethylene terephthalate is provided as granulate and the average granulate size lies between 0.4 and 3 mm, preferably between 0.7 and 2 mm, and in particular between 0.8 and 1.4 mm.

12. Polyethylene terephthalate according to claim 11, **characterized in that** the granulate consists of massive particles which have a defined shape such as for example cylindershaped, spherical-shaped, drop-shaped and spherical-like.

13. Polyethylene terephthalate according to any of the preceding claims, **characterized in that** the degree of polymerization lies between 120 and 250, in particular between 145 and 180, and the comonomer content amounts to less than 3.5 mol %.

14. Polyethylene terephthalate, suitable for the manufacture of hollow bodies in the injection molding method according to any of the preceding claims, **characterized in that** the degree of polymerization lies between 80 and 150, in particular between 100 and 130.

15. A method for the manufacture of a polyethylene terephthalate according to any of the preceding claims, consisting of the steps:

> a) Manufacture of a polycondensate prepolymer melt having a degree of polymerization between 10 and 50 from a diol component which consists to 95 mol % up to 100 mol % of ethylene glycol, and a dicarboxylic acid component, which consists to 95 mol % up to 100 mol % terephthalic acid, wherein the total comonomer content lies between 1 and 7%,
> b) Formation of granulates having an average granule size between 0.2 mm and 3 mm, and solidification of the polycondensate prepolymer melt,
> c) Raising the degree of crystallization of the prepolymer granulates,
> d) Raising the molecular weight of the granulates by means of solid phase polycondensation for 6-30 h,

**characterized in that** in the step d) a treatment temperature of 220°C is not exceeded.

16. The method according to claim 15, **characterized in that** the step d) comprises a partial step of heating up with the aid of a process gas and a partial step of the post-condensation reaction with the aid of a process gas, and that the partial step of heating up takes place at least initially with use of a fresh gas or an at least partially purified process gas.

17. The method according to one of claims 15 or 16, **characterized in that** the step d) comprises a partial step of heating up with the aid of a process gas and a partial step of the post-condensation reaction with the aid of a process gas, and that the partial step of the post-condensation reaction takes place at least initially with use of a fresh gas or an at least partially purified process gas.

18. The method according to any one of claims 15 to 17, **characterized in that** the partial step of the post-condensation reaction takes place in a shaft reactor, which has at least one gas inlet in the upper third of the reactor.

19. The method according to any one of claims 15 to 18, **characterized in that** it takes place continuously, and the partial step of the post-condensation reaction takes place with the aid of a process gas, wherein the amount of gas to the amount of product (mg/mp) lies between 0.1 and 1.4, especially between 0.3 and 0.8.

20. The method according to any one of claims 15 to 19, **characterized in that** the DSC melting point in the second run, measured on a granulate after method step b), lies at least 2°C below the DSC melting point in the second run, measured on a granulate after the method step d).

21. The method according to any one of claims 15 to 20, **characterized in that** the polycondensate-prepolymer melt is a low viscosity polycondensate-prepolymer melt with a degree of polymerization between 15 and 35.

**Revendications**

1. Polyéthylène-téréphtalate partiellement cristallin, ayant un degré de polymérisation supérieur à 80, notamment supérieur à 100, fabriqué à partir de :

   a) un composant diol, qui est constitué de 95 % en moles à 100 % en moles d'éthylène glycol, et
   b) un composant acide dicarboxylique, qui est constitué de 95 % en moles à 100 % en moles d'acide téréphtalique, la teneur totale en comonomères étant comprise entre 1 et 7 %,

   lors d'une première étape, le composant diol et le composant acide dicarboxylique étant réunis en phase liquide pour obtenir un prépolymère faiblement visqueux ayant un degré de polymérisation compris entre 10 et 50, et le prépolymère étant ensuite granulé en granulats d'une taille de granulat moyenne comprise entre 0,2 et 3 mm, et les granulats étant soumis à une polycondensation en phase solide à une température de moins de 220 °C pendant 6 à 30 h pour obtenir un polyéthylène téréphtalate, le point de fusion DSC du polyéthylène téréphtalate, mesuré avec un taux de chauffe de 10 °C/min lors du premier passage et lors du deuxième passage, étant inférieur à une température de fusion (Tm) dépendante de la teneur en comonomères d'un polyéthylène téréphtalate standard comparable qui a été fabriqué par polycondensation en phase solide à partir d'un prépolymère ayant un degré de polymérisation compris entre 65 et 80, qui a été mis sous la forme de granulats ayant une masse de 10 à 30 mg et refroidi avec de l'eau en dessous de sa température de transition vitreuse, avec Tm = T0 -2,5 °C * % de teneur en comonomères (en % en moles) et T0 inférieure ou égale à 260 °C, la proportion de comonomères du composant diol étant principalement constituée de diéthylène glycol, ou Tm = T0 - 3 °C * % de teneur en comonomères (en % en moles) et T0 inférieure ou égale à 260 °C.

2. Polyéthylène téréphtalate selon la revendication 1, **caractérisé en ce que** T0 est inférieure ou égale à 259 °C et notamment **en ce que** T0 est inférieure ou égale à 257 °C.

3. Polyéthylène téréphtalate selon l'une quelconque des revendications précédentes, fabriqué à partir d'un composant diol, qui est constitué de 97 % en moles à 99 % en moles d'éthylène glycol, et d'un composant acide dicarboxylique, qui est constitué de 97 % en moles à 100 % en moles d'acide téréphtalique, la teneur totale en comonomères étant comprise entre 1,5 et 5 %.

4. Polyéthylène téréphtalate selon la revendication 3, **caractérisé en ce que** le point de fusion DSC lors du premier passage et lors du deuxième passage est inférieur à 245 °C.

5. Polyéthylène téréphtalate selon l'une quelconque des revendications précédentes, **caractérisé en ce que** le point de fusion DSC lors du premier passage est supérieur au point de fusion DSC lors du deuxième passage.

6. Polyéthylène téréphtalate selon l'une quelconque des revendications précédentes, **caractérisé en ce que** T0 lors du premier passage est inférieure ou égale à 260 °C et lors du deuxième passage inférieure ou égale à 258 °C.

**7.** Polyéthylène téréphtalate selon la revendication 6, **caractérisé en ce que** T0 lors du premier passage est inférieure ou égale à 259 °C et notamment **en ce que** T0 est inférieure ou égale à 257 °C, et lors du deuxième passage inférieure ou égale à 257 °C, et notamment **en ce que** T0 est inférieure ou égale à 255 °C.

**8.** Polyéthylène téréphtalate partiellement cristallin selon l'une quelconque des revendications précédentes, **caractérisé en ce qu'**il s'agit d'un polyéthylène téréphtalate partiellement cristallin thermique.

**9.** Polyéthylène téréphtalate selon l'une quelconque des revendications précédentes, **caractérisé en ce qu'**il s'agit d'un polyéthylène téréphtalate essentiellement linéaire.

**10.** Polyéthylène téréphtalate selon l'une quelconque des revendications précédentes, **caractérisé en ce que** le polyéthylène téréphtalate présente une enthalpie de fusion DSC lors du premier passage inférieure à 70 J/g, notamment inférieure à 65 J/g.

**11.** Polyéthylène téréphtalate selon l'une quelconque des revendications précédentes, **caractérisé en ce que** le polyéthylène téréphtalate se présente sous la forme d'un granulat et la taille de granulat moyenne est comprise entre 0,4 et 3 mm, de préférence entre 0,7 et 2 mm et notamment entre 0,8 et 1,4 mm.

**12.** Polyéthylène téréphtalate selon la revendication 11, **caractérisé en ce que** le granulat est constitué de particules massives, qui présentent une forme définie, telle que p. ex. une forme cylindrique, une forme sphérique, une forme de goutte ou une forme sphéroïdale.

**13.** Polyéthylène téréphtalate selon l'une quelconque des revendications précédentes, **caractérisé en ce que** le degré de polymérisation est compris entre 120 et 250, notamment entre 145 et 180, et la teneur en comonomères est inférieure à 3,5 % en moles.

**14.** Polyéthylène téréphtalate, approprié pour la fabrication de corps creux dans le procédé de moulage par injection selon l'une quelconque des revendications précédentes, **caractérisé en ce que** le degré de polymérisation est compris entre 80 et 150, notamment entre 100 et 130.

**15.** Procédé de fabrication d'un polyéthylène téréphtalate selon l'une quelconque des revendications précédentes, constitué par les étapes suivantes :

a) la fabrication d'une masse fondue de prépolymère de polycondensat ayant un degré de polymérisation compris entre 10 et 50 à partir d'un composant diol, qui est constitué de 95 % en moles à 100 % en moles d'éthylène glycol, et d'un composant acide dicarboxylique, qui est constitué de 95 % en moles à 100 % en moles d'acide téréphtalique, la teneur totale en comonomères étant comprise entre 1 et 7 %,
b) la formation de granulats ayant une taille de granulat moyenne comprise entre 0,2 et 3 mm et la solidification de la masse fondue de prépolymère de polycondensat,
c) l'augmentation du degré de cristallisation des granulats de prépolymère,
d) l'augmentation du poids moléculaire des granulats par polycondensation en phase solide pendant 6 à 30 h, **caractérisé en ce qu'**à l'étape d), une température de traitement de 220 °C n'est pas dépassée.

**16.** Procédé selon la revendication 15, **caractérisé en ce que** l'étape d) comprend une étape partielle de chauffage sous l'effet d'un gaz de procédé et une étape partielle de réaction de post-condensation sous l'effet d'un gaz de procédé, et l'étape partielle de chauffage a lieu a moins initialement en utilisant un gaz de procédé pur ou au moins partiellement purifié.

**17.** Procédé selon l'une quelconque des revendications 15 à 16, **caractérisé en ce que** l'étape d) comprend une étape partielle de chauffage sous l'effet d'un gaz de procédé et une étape partielle de réaction de post-condensation sous l'effet d'un gaz de procédé, et l'étape partielle de réaction de post-condensation a lieu au moins initialement en utilisant un gaz de procédé pur ou au moins partiellement purifié.

**18.** Procédé selon l'une quelconque des revendications 15 à 17, **caractérisé en ce que** l'étape partielle de réaction de post-condensation a lieu dans un réacteur vertical, qui comprend au moins une entrée de gaz dans le tiers supérieur du réacteur.

**19.** Procédé selon l'une quelconque des revendications 15 à 18, **caractérisé en ce qu'**il a lieu en continu et l'étape partielle de réaction de post-condensation a lieu sous l'effet d'un gaz de procédé, le rapport entre la quantité de gaz et la quantité de produit (mg/mp) étant compris entre 0,1 et 1,4, notamment entre 0, 3 et 0,8.

20. Procédé selon l'une quelconque des revendications 15 à 19, **caractérisé en ce que** le point de fusion DSC lors du deuxième passage mesuré sur un granulat selon l'étape de procédé b) est au moins 2 °C en dessous du point de fusion DSC lors du deuxième passage mesuré sur un granulat selon l'étape de procédé d).

21. Procédé selon l'une quelconque des revendications 15 à 20, **caractérisé en ce que** la masse fondue de prépolymère de polycondensat est une masse fondue de prépolymère de polycondensat faiblement visqueuse ayant un degré de polymérisation compris entre 15 et 35.

Fig 1a

Probe: 04231014Orig.A, 14.9100 mg

Integral            -757.81 mJ
  normalis.         -50.83 Jg^-1
Peak               240.92 °C
Linke Grenze       212.59 °C
Rechte Grenze      266.98 °C

Peak 248.1°C

5 mW

2 mW°C^-1

180  190  200  210  220  230  240  250  260  270  280 °C

40    60    80    100   120   140   160   180   200   220   240   260   280   °C

Fig 16

Probe: 04231014Orig.B, 14.9100 mg

2. Durchlauf

| | |
|---|---|
| Integral | -479.77 mJ |
| normalis. | $-32.18\ \mathrm{Jg}^{-1}$ |
| Peak | 248.31 °C |
| Linke Grenze | 209.75 °C |
| Rechte Grenze | 267.09 °C |

EP 1 727 849 B1

Fig 2a

Probe: 04231016Orig.A, 16.8700 mg

| | |
|---|---|
| Integral | -927.12 mJ |
| normalis. | -54.96 Jg^-1 |
| Peak | 246.78 °C |
| Linke Grenze | 215.75 °C |
| Rechte Grenze | 270.31 °C |

10 mW

2 mW°C^-1

200  210  220  230  240  250  260  270  280  °C

40  60  80  100  120  140  160  180  200  220  240  260  280  °C

EP 1 727 849 B1

Fig 26

Probe: 04231016Orig.B, 16.8700 mg

2.Durchlauf

5
mW

| | |
|---|---|
| Integral | -545.87 mJ |
| normalis. | -32.36 Jg^-1 |
| Peak | 248.61 °C |
| Linke Grenze | 198.76 °C |
| Rechte Grenze | 274.35 °C |

40   60   80   100   120   140   160   180   200   220   240   260   280   °C

EP 1 727 849 B1

Probe: 04231017Orig.A, 12.3600 mg

Fig 3a

| | |
|---|---|
| Integral | -696.80 mJ |
| normalis. | -56.38 Jg^-1 |
| Peak | 251.46 °C |
| Linke Grenze | 222.23 °C |
| Rechte Grenze | 283.15 °C |

Fig 36

Probe: 04231017Orig.B, 12.3600 mg

2. Durchlauf

2 mW

| Integral | -344.59 mJ |
| normalis. | -27.88 Jg^-1 |
| Peak | 245.96 °C |
| Linke Grenze | 204.20 °C |
| Rechte Grenze | 267.74 °C |

°C

EP 1 727 849 B1

Fig. 4a

Probe: 0475003a, 16.8900 mg

| | |
|---|---|
| Integral | -912.03 mJ |
| normalis. | -54.00 Jg^-1 |
| Peak | 249.00 °C |
| Linke Grenze | 214.66 °C |
| Rechte Grenze | 280.98 °C |

*Fig. 46*

Probe: 0475003b, 16.8900 mg

2. Durchlauf

| | |
|---|---|
| Integral | -528.01 mJ |
| normalis. | -31.26 Jg^-1 |
| Peak | 250.31 °C |
| Linke Grenze | 200.26 °C |
| Rechte Grenze | 267.96 °C |

5 mW

24

Fig. 5a

Probe: 03560001DIIIm, 15.4000 mg

| | |
|---|---|
| Integral | -948.99 mJ |
| normalis. | -61.62 Jg^-1 |
| Peak | 242.65 °C |
| Linke Grenze | 185.83 °C |
| Rechte Grenze | 274.35 °C |

10 mW

10 mW°C^-1

140   160   180   200   220   240   260   280°C

40   60   80   100   120   140   160   180   200   220   240   260   280   °C

EP 1 727 849 B1

Fig. 56

Probe: 03560001DIIImw, 15.4000 mg

2. Durchlauf

5 mW

| | |
|---|---|
| Integral | -443.72 mJ |
| normalis. | -28.81 Jg^-1 |
| Peak | 241.33 °C |
| Linke Grenze | 207.15 °C |
| Rechte Grenze | 256.60 °C |

°C

Fig. 69

Probe: 03560001Alm, 11.3200 mg

Integral         -739.99 mJ
  normalis.      -65.37 Jg^-1
Peak             244.61 °C
Linke Grenze     186.33 °C
Rechte Grenze    278.55 °C

10 mW

10 mW°C^-1

Fig. 66

Probe: 03560001Almw, 11.3200 mg

2. Durchlauf

| Integral | -331.44 mJ |
| normalis. | -29.28 Jg^-1 |
| Peak | 240.76 °C |
| Linke Grenze | 201.35 °C |
| Rechte Grenze | 255.80 °C |

5 mW

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4161578 A
- EP 0532988 A
- WO 0142334 A
- WO 9961505 A
- EP 0465040 A1
- US 5532333 A, Stouffer
- DE 10204954
- EP 0541674 A

**In der Beschreibung aufgeführte Nicht-Patentliteratur**

- **KARAYANNIDIS.** *J. Appl. Sci.,* 1993, vol. 50, 2135
- **MODERN POLYESTERS.** Wiley Series in Polymer Science. J. Wiley & Sons Ltd, 2003
- Modern Polyesters. Wiley Series in Polymer Science. J. Wiley & Sons Ltd, 2003